# EUROPEAN PATENT APPLICATION

(11) **EP 2 615 559 A1**
(43) Date of publication of application: **17.07.2013**
(21) Application number: 11823704.9
(22) Date of filing: 19.04.2011
(51) Int. Cl.: G06F 15/16, G06F 17/00, G06F 3/14, H04W 4/00

(54) **SYSTEM FOR DISPLAYING CACHED WEBPAGES, A SERVER THEREFOR, A TERMINAL THEREFOR, A METHOD THEREFOR AND A COMPUTER-READABLE RECORDING MEDIUM ON WHICH THE METHOD IS RECORDED**

(30) Priority: 09.09.2010 KR 20100088324; 07.09.2010 KR 20100087459
(71) Applicant: SK Planet Co., Ltd., Seoul 100-999 (KR)
(72) Inventor: KWAK, Nohyun, Goyang-si Gyeonggi-do 412-170 (KR); LEE, Soonho, Seoul 137-812 (KR)
(74) Representative: Barth, Stephan Manuel
(86) International application number: PCT/KR2011/002786
(87) International publication number: WO 2012/033271

(57) **Abstract**

The present invention relates to a system for displaying cached webpages, to a server therefor, to a terminal therefor, to a method therefor, and to a computer-readable recoding medium on which the method is recorded. Provided is a system for displaying cached webpages, the system comprising: a Web service server which stores at least one webpage; a caching server which collects links to webpages that match preset conditions in the webpage(s), and then creates a caching page list that comprises at least one of the links to webpages so collected; and a terminal which refers to the link(s) to webpage(s) in the caching page list, and then caches the webpage(s), and which, whenever a user inputs a link for calling up a specific webpage, simultaneously displays the input link and the link to the cached webpage. Also, provided is a system for displaying cached webpages, the system comprising: a Web service server which stores at least one webpage; a caching server which collects links to webpages that match preset conditions in the webpage(s), and then creates a caching page list that comprises at least one of the links to webpages so collected; and a terminal which receives the caching page list and then displays the link(s) to webpage(s) in the caching page list so received, and which refers to the link(s) to webpage(s) so displayed and then caches the webpages, and also effects a display such that webpages cached in links of the webpages so displayed are separate from non-cached webpages.

## Description

### TECHNICAL FIELD

The present invention relates to a technology for displaying cached webpages, and more particularly, to a system for displaying links to webpages cached in a web application that displays webpages, a server therefor, a terminal therefor, a method therefor, and a computer-readable recording medium on which the method is recorded.

### BACKGROUND ART

With the advent of open environment owing to the growth of smartphone, open applications and platform environments are required for service differentiation. More specifically, the rapid growth of smartphone in which a user can freely install desired mobile applications enables development of mobile applications available in the smartphone and activation of an open market place (OMP) where these mobile applications can be freely transacted.

A web that was created to represent static and simple contents has rapidly expand user base and service area because it can provide user interfaces on a level everywhere if an environment in which a client application called a browser is prepared. Furthermore, web contents have evolved from simple contents that describe specific contents to a web application that can provide a service that a user desires in response to a user input.

However, the web application has page transition slower than that of a native application because the web application is composed of a plurality of webpages which are connected through a link and data of a called page is retrieved and displayed when a page transition event occurs. In addition, the whole or some of the webpages that constitute the web application are executed in connection with a server through a network in many cases, and thus the web application is not normally executed in an off-line mode in which the network is disconnected.

To solve the above-mentioned problem, caching that downloads and stores webpages in advance is performed. However, since conventional caching is limited to pages previously visited by a user, the probability that the user revisits cached webpages is low. Therefore, caching efficiency is deteriorated.

### DETAILED DESCRIPTION OF THE INVENTION

### Technical Problems

An object of the present invention is to provide a system for displaying cached webpages, which provides links to webpages that match preset conditions to improve caching efficiency, for webpage caching, a server therefor, a terminal therefor, a method therefor, and a computer-readable recording medium on which the method is recorded.

Another object of the present invention is to provide a system for displaying cached webpages, which is able to inform a user of previously downloaded page(s), that is, cached page(s), a server therefor, a terminal therefor, a method therefor, and a computer-readable recording medium on which the method is recorded.

Another object of the present invention is to provide a system for displaying cached webpages, which is able to inform a user of cached webpage(s) when the user attempts to call a specific webpage in order to move from a current webpage to the specific webpage, a server therefor, a terminal therefor, a method therefor, and a computer-readable recording medium on which the method is recorded.

Another object of the present invention is to provide a system for displaying cached webpages, which is able to display a list of webpages that will be cached and then inform a user of cached webpages, a server therefor, a terminal therefor, a method therefor, and a computer-readable recording medium on which the method is recorded.

### Technical Solutions

According to an aspect of the present invention, a system for displaying cached webpages includes: a web service server configured to store one or more webpages; a caching server configured to collect links to webpages that match preset conditions from among the webpages, and to create a caching page list including at least one of the collected links to webpages; and a terminal configured to cache the webpages by referring to the links to webpages in the caching page list and, whenever receiving a user input of a link for calling up a specific webpage, to simultaneously display the input link and the link to the cached webpages.

According to another aspect of the present invention, a server for displaying cached webpages includes: a communication module configured to transmit/receive data through a network; a registration module configured to register at least one condition of a specific keyword for collecting links to webpages having contents related to the keyword and a visit information collection object having information for discriminating a specific user from other users to collect links to webpages visited by the specific user; and a caching module configured to collect links to webpages that match the condition, to create a caching page list including at least one of the collected links to webpages, and to provide the created caching page list to a terminal through the communication module.

The condition may include a specific keyword for collecting links to webpages having contents related to the keyword and a visit information collection object having information for discriminating a specific user from other users to collect links to webpages visited by the specific user.

The server may further include a registration module configured to register the condition.

The server may further include a storage module configured to store the caching page list.

According to another aspect of the present invention, a terminal for displaying cached webpages, includes: an input unit configured to receive an input signal from a user; a display unit configured to visually display data; and a controller configured to execute a web application that displays webpages and, when detecting a user input of a link to a specific webpage through the input unit, to control the display unit to simultaneously display the input link and at least one of links to cached webpages.

The web application may have an address input window as an interface through which a link to webpages is input, and the input link and the cached webpages may be displayed in the address input window.

The terminal may further include a communication unit configured to transmit/receive data through a network, wherein the controller receives a caching page list including at least one of links to webpages collected according to preset conditions through the communication unit and generates the cached webpages by downloading the webpages and storing the downloaded webpages.

The communication unit may include at least one of a wireless communication unit configured to transmit/receive data in a wireless manner, and a wired communication unit configured to transmit/receive data in a wired manner.

The wireless communication unit may include at least one of a wireless network communication unit configured to transmit/receive data by being connected to a network through a base station, a wireless local area network (WLAN) communication unit configured to transmit/receive data by being connected to a network through an access point, and a wireless personal area network (WPAN) communication unit configured to transmit/receive data by being connected to a network through a gateway according to a wireless PAN scheme.

The terminal may further include a storage unit configured to store the caching page list and at least one of the cached webpages.

When the controller detects selection of one of the input link and the link to cached webpages by the user through the input unit, the controller may display a webpage corresponding to the selected link through the display unit.

When the selected link corresponds to the link to cached webpages, the controller may load the cached webpages from the storage unit and display the cached webpages through the display unit.

The link to cached webpages may be displayed in at least one of an address form and an image form.

The address form may correspond to a URI and the image form may correspond to an icon.

According to another aspect of the present invention, a method for displaying cached webpages includes: executing a web application that displays webpages corresponding to input links; upon detection of input of a link to a specific webpage by a user, checking whether cached webpages are present; and displaying the input link and at least one of links to the cached webpages when the cached webpages are present.

When the user selects one of the input link and the links to the cached webpages, the method may further include displaying a webpage corresponding to the selected link after the displaying of the input link and at least one of links to the cached webpages.

When the user selects a link to cached webpages, the displaying of the webpage may include loading and displaying the cached webpages stored in a terminal.

According to another aspect of the present invention, there is provided a computer-readable recoding medium on which the method for displaying cached webpages in the terminal is recorded.

According to another aspect of the present invention, a system for displaying cached webpages includes: a web service server configured to store one or more webpages; a caching server configured to collect links to webpages that match preset conditions from among the webpages and to create a caching page list including at least one of the collected links to webpages; and a terminal configured to receive the caching page list, to display the links to webpages, included in the received caching page list, to cache the webpages by referring to the displayed links to webpages, and to display links to the cached webpages such that the links to the cached webpages are discriminated from links to non-cached webpages.

According to another aspect of the present invention, a server for displaying cached webpages includes: a communication module configured to transmit/receive data through a network; a registration module configured to register a condition for collecting links to webpages according to terminal user; and a caching module configured to collect links to webpages that match the condition, to create a caching page list including at least one of the collected links to webpages, and to provide the created caching page list to a terminal through the communication module.

The condition may include a specific keyword for collecting links to webpages having contents relating to the keyword and a visit information collection object having information for discriminating a specific user from other users to collect links to webpages visited by the specific user.

The server may further include a registration module configured to register the condition.

The server may further include a storage module configured to store the caching page list.

According to another aspect of the present invention, a terminal for displaying cached webpages includes a communication unit configured to transmit/receive data through a network; a display unit configured to visually display data; and a controller configured to execute a web application that displays webpages, to display the web application through the display unit, to receive a caching page list including at least one of links to webpages, collected according to preset conditions, through the communication unit, and to display the links to webpages included in the caching page list, wherein the controller caches the webpages by referring to the displayed links to webpages, and to display links to cached webpages such that the links to cached webpages are discriminated from links to non-cached webpages.

The links to cached webpages may be displayed in at least one of an address form in which a webpage link is displayed as a text and an image form in which a webpage link is displayed as an image.

The address form may correspond to a URI and the image form may correspond to an icon.

When the links to cached webpages are displayed in the address form, the controller may display the links to cached webpages in such a manner that at least one of a font, thickness and color of the links to cached webpages is different from that of the links to non-cached webpages so as to discriminate the links to cached webpages from the links to webpages that are not cached.

When the links to cached webpages are displayed in the image form, the controller may display the links to cached webpages such that the links to cached webpages are subjected to an image effect to be distinguished from the links to non-cached webpages, wherein the image effect uses at least one of a method of expressing an image in a fluorescent color, a method of drawing a border around an image, and a method of displaying an image as if the image is protruded.

The controller may display the links to non-cached webpages as icons and display the links to cached webpages as thumbnail images such that the links to cached webpages are discriminated from the links to non-cached webpages.

The terminal may further include a storage unit configured to store at least one of the cached webpages and the caching page list.

The controller may load the cached webpages from the storage unit and display the cached webpages through the display unit upon detection of input for selecting the links to cached webpages.

The communication unit may include at least one of a wireless communication unit configured to transmit/receive data in a wireless manner, and a wired communication unit configured to transmit/receive data in a wired manner.

The wireless communication unit may include at least one of a wireless network communication unit configured to transmit/receive data by being connected to a network through a base station, a WLAN communication unit configured to transmit/receive data by being connected to a network through an access point, and a WPAN communication unit configured to transmit/receive data by being connected to a network through a gateway according to a WPAN scheme.

According to another aspect of the present invention, a method for displaying cached webpages in a terminal includes: executing a web application that displays webpages; receiving a caching page list including at least one of links to webpages collected according to preset conditions; displaying the links to webpages included in the received caching page list; and referring to the displayed links to webpages, caching the webpages, and displaying links to cached webpages from among the displayed links to webpages such that the links to cached webpages are discriminated from links to non-cached webpages.

The links to cached webpages may be displayed in at least one of an address form in which a webpage link is displayed as a text and an image form in which a webpage link is displayed as an image.

The address form may correspond to a URI and the image form may correspond to an icon.

The displaying of the web application may include displaying the links to non-cached webpages as icons and displaying the links to cached webpages as thumbnail images such that the links to cached webpages are discriminated from the links to non-cached webpages.

According to another aspect of the present invention, there is provided a computer-readable recording medium on which the method for displaying cached webpages in a terminal is recorded.

### Advantageous effects

According to the present invention, a caching page list having links to webpages collected according to preset conditions is created and caching is performed using the created caching page list so as to increase the probability that a user uses cached webpages, thereby improving caching efficiency.

Furthermore, the present invention displays links to webpages cached in a terminal to inform the user that there are cached webpages such that the user uses the cached webpages. Accordingly, the probability that the user uses the cached webpages is increased so as to improve caching efficiency.

In addition, the present invention can inform the user of cached webpages by displaying the addresses of the cached webpages when the user inputs the address of a specific webpage in order to call the specific webpage such that the user can call the cached webpage. Accordingly, webpage caching efficiency is improved.

The present invention displays the caching page list and then displays links to cached webpages from among links to webpages included in the caching page list such that the user can be informed of whether a specific webpage is cached. Accordingly, web caching efficiency can be improved and use of a webpage caching function is encouraged.

Particularly, a web application can be stably executed through caching according to the present invention in an off-line area, an area having expensive line cost, or an area having a poor networks state.

### BRIEF DESCRIPTION OF THE DRAWINGS

FIG. 1 illustrates a system for displaying cached webpages according to an embodiment of the present invention;

FIG. 2 illustrates a configuration of a caching server for displaying cached webpages according to an embodiment of the present invention;

FIG. 3 illustrates a configuration of a terminal for displaying cached webpages according to an embodiment of the present invention;

FIG. 4 illustrates a method for displaying cached webpages according to a first embodiment of the present invention;

FIG. 5 illustrates a method for displaying cached webpages in a caching system according to the first embodiment of the present invention;

FIG. 6 illustrates a method for displaying cached webpages in a terminal according to the first embodiment of the present invention;

FIG. 7 illustrates a method for displaying cached webpages according to a second embodiment of the present invention;

FIG. 8 illustrates a method for displaying cached webpages in a caching system according to the second embodiment of the present invention;

FIG. 9 illustrates a method for displaying cached webpages in a terminal according to the second embodiment of the present invention; and

FIG. 10 illustrates a method for displaying webpages according to an embodiment of the present invention.

### BEST MODE FOR CARRYING OUT THE INVENTION

Reference will now be made in detail to the preferred embodiments of the present invention with reference to the accompanying drawings. In the following description of the present invention, a detailed description of known functions and configurations incorporated herein will be omitted when it may obscure the subject matter of the present invention. The same reference numbers will be used throughout this specification to refer to the same or like parts.

The phraseology and terminology used in the specification and the appended claims should not be interpreted as limited general or literal meanings. Rather, they should be interpreted according to the technical features of the present invention based on the principle that the inventor can define terms appropriately to describe his invention in the best way. Accordingly, embodiments and configurations shown in the drawings are exemplary and do not completely represent the technical spirit of the present invention, and thus it is noted that there are various equivalents and modifications that can replace the embodiments and configuration.

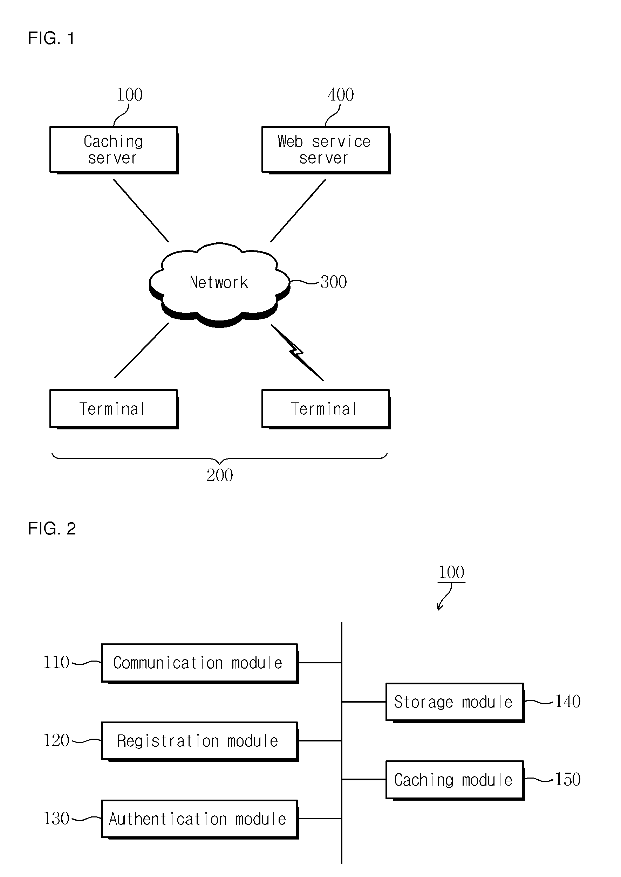

FIG. 1 illustrates a system for displaying cached webpages according to an embodiment of the present invention.

Referring to FIG. 1, a caching system includes a caching server 100, a terminal 200, and a web service server 400. Reference numeral 300 denotes a network. The terminal 200 can access the caching server 100 through the network 300. The terminal 200 can also access the web service server 400 through the network 300.

The caching server 100 provides a caching service according to embodiments of the present invention. The caching service collects links to webpages that the terminal 200 intends to cache and provides the collected links to the terminal 200. Caching is an operation of receiving and storing specific data in advance. In the embodiments of the present invention, caching is performed on webpages. Accordingly, caching according to the embodiments of the present invention means an operation of the terminal 200 to download and store a webpage in advance. The caching service provides links to webpages to the terminal 200 such that the terminal 200 caches a specific webpage with reference to the links.

The caching server 100 can collect links to webpages that match preset conditions from among webpages in order to provide the caching service. Here, the conditions can be set by a keyword and a visit information collection object. The keyword is used to collect links to webpages including contents relating to the keyword. The visit information collection object is used to collect links to webpages visited by a specific user and includes information for discriminating the specific user from other users.

The caching server 100 can receive a keyword from a user who requests the caching service, register the keyword, and collect links to webpages relating to the registered keyword to create a caching page list. Here, the keyword is selected by the user and the user preferably sets one or more keywords about an object in which the user is interested. For example, the keyword can be the name of a person, area, place, article, store and food in which the user is interested. Upon registration of the keyword, the caching server 100 searches webpages stored in the web service server 400 to collect one or more links to webpages relating to the keyword. For example, if the web service server 400 is a server that provides a music service, the web service server 400 can store a plurality of webpages for providing the music service. In this case, when the user sets the name of a singer as a keyword, the caching server 100 collects links to webpages relating to the singer from the web service server 400. In addition, the caching server 100 creates a caching page list including at least one of the collected links to webpages.

The caching server 100 can set a visit information collection object for the user who requests the caching service and collect links to webpages visited by the set visit information collection object to create a caching page list. The visit information collection object can be set to an acquaintance of the user or another user who has conditions similar to those of the user. The other user having similar conditions may be another user having primary information and secondary information at least one of which is matched to that of the user. The primary information includes one or more of the sex, age and residence of the user and secondary information includes one or more of the area of interest, hobby and taste of the user.

As described above, the caching server 100 can provide the created caching page list to the terminal 200. The terminal 200 can check a network connection state and receive the caching page list by requesting the caching server 100 to transmit the caching page list when network connection is established. The terminal 200 can perform caching that receives and stores at least one webpage included in the caching page list in advance. As described above, the caching page list can be created on the basis of the keyword transmitted from the terminal 200 or the visit information collection object set by the user of the terminal 200.

In accordance with a first embodiment of the present invention, when the user inputs a link for requesting a specific webpage, the terminal 200 can simultaneously display the input link and links to cached webpages. When the user selects a link to cached webpage(s) with reference to the displayed links to cached webpages, the terminal 200 can display the cached webpage. The user inputs a link to a specific webpage other than the currently displayed webpage when the user wants to call the specific webpage. At this time, when the links to cached webpages are displayed, the probability that the user selects the links to cached webpages increases. Accordingly, caching efficiency can be improved. In the case of off-line state, poor network state or expensive network access cost, the probability that a cached webpage is selected increases and caching efficiency is further improved.

In accordance with a second embodiment of the present invention, the terminal 200 can display links to cached webpages. In this case, the terminal 200 can discriminate the links to cached webpages from links to non-cached webpages. When the user selects a link to cached webpage(s) with reference to the links to cached webpages, the terminal 200 can display the cached webpage. If the links to cached webpages are displayed in an off-line area, an area having a poor network state, or an area having expensive network access cost, the probability that the user selects a cached webpage is high and caching efficiency can be improved. Therefore, the user can stably use a web application using the caching service.

The terminal 200 can be configured in the form of a device that can execute web applications and access networks, for example, a personal computer (PC), a notebook computer, a mobile phone, a tablet PC, a navigation system, a smartphone, personal digital assistants (PDA), a portable multimedia player (PMP), or a digital broadcast receiver such as digital video broadcasting (DMB) receiver. These devices are exemplary and currently developed and commercialized devices or devices that will be developed in the future, which are available for communication, can be used as the terminal 200.

The network 300 relays data between the caching server 100 and the web service server 400 and the terminal 200 and can be implemented as any of existing communication networks and next-generation communication networks that will be developed in the future. For example, the network 300 can use one or more conventional communication networks such as an IP network that provides a large-capacity data transmission/reception service and a ceaseless data service through Internet protocol, All IP network that is a combination of different networks based on IP, wireless broadband (WiBro) network, wireless LAN including Wi-Fi, WPAN, wired communication network, mobile communication network, high speed downlink packet access (HSDPA) network, satellite communication network, etc. Particularly, when the terminal 200 is a smartphone, the network 300 can be a mobile communication network or Wi-Fi network because the smartphone is available for communication through the Wi-Fi network as well as the mobile communication network.

The web service server 400 may include a plurality of servers that store webpages corresponding to the links included in the caching page list. For example, the web service server 400 may be a web server. The caching server 100 can provide the caching service only for webpages provided by one web service server 400 or provide the caching service for webpages stored in a plurality of web service servers 400. Particularly, the web service server 400 can be any server that provides webpages to the terminal 200 through the network 300. A web server is a representative of the web service server 400. The web service server 400 may be a server that provides multimedia contents such as video and music or a server that provides a social network service.

FIG. 2 illustrates a configuration of the caching server for displaying cached webpages according to an embodiment of the present invention.

Referring to FIG. 2, the caching server 100 according to an embodiment of the present invention includes a communication module 110, a registration module 120, an authentication module 130, a storage module 140, and a caching module 150.

The communication module 110 transmits/receives data through the network 300 and, particularly, transmits/receives data to/from the terminal 200 or the web service server 400 through the network 300. The communication module 110 may include a protocol processing means for performing a process according to a communication protocol depending on the type of the network 300 connected thereto.

The registration module 120 stores at least one keyword or at least one visit information collection object for each terminal 200. That is, the caching server 100 can collect links to webpages that match preset conditions from among webpages and the registration module 120 registers the conditions.

The registration module 120 can receive a keyword from the terminal 200 and store the keyword. Here, the keyword can be registered, changed, deleted and added at the request of the terminal 200. The registration module 120 can set a visit information collection object for each terminal 200 and register the set visit information collection object. In this case, the registration module 120 can register the visit information collection object by storing identification information of the visit information collection object. As described above, the visit information collection object can be selected from other users having conditions similar to those of the user. Here, it is desirable that the visit information collection object, for example, an acquaintance of the user or another user having conditions similar to those of the user, subscribes to the caching service. To set the visit information collection object, the registration module 120 can request the terminal 200 to set the visit information collection object through the communication module 110, receive information about an acquaintance of the user from the terminal 200, and set the acquaintance of the user as the visit information collection object. Alternatively, the registration module 120 can collect at least one of the primary information including one or more of the sex, age and residence of the user and the secondary information including one or more of the area of interest, hobby and taste of the user in order to set the visit information collection object. Then, the registration module 120 can extract a specific user having information corresponding to information about the user of the terminal 200, which includes the primary information and the secondary information, from other users and set the extracted user as the visit information collection object.

The authentication module 130 can receive identification information of the terminal 200, which will be provided with the caching service, in advance, store the identification information, and authenticate the terminal 200 corresponding to the identification information to provide the caching service.

The storage module 140 stores the caching page list. The caching page list can be stored for the user of each terminal 200. In addition, the caching page list can be stored in the form of a file or a database.

The caching module 150 can collect links to webpages that match corresponding conditions from the web service server 400 on the basis of the keyword and visit information collection object registered in the registration module 120. Then, the caching module 150 creates the caching page list including at least one of the collected links to webpages. The caching module 150 can transmit the caching page list to the terminal 200 through the communication module 110.

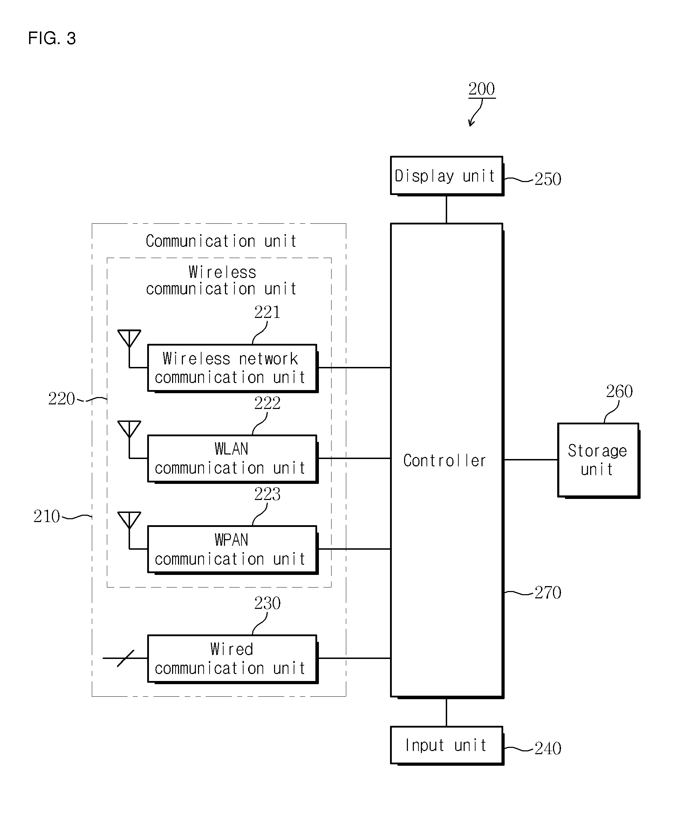

FIG. 3 illustrates a configuration of the terminal for displaying cached webpages according to an embodiment of the present invention.

Referring to FIG. 3, the terminal 200 according to an embodiment of the present invention includes a communication unit 210, an input unit 240, a display unit 250, a storage unit 260, and a controller 270.

The communication unit 210 transmits/receives data through communication with the caching server 100 and the web service server 400 via the network 300. Here, the data includes the caching page list, webpages, etc.

The communication unit 210 can include at least one of a wireless communication unit 220 and a wired communication unit 230. The wireless communication unit 220 can include at least one of a wireless network communication unit 221, a wireless local area network (WiFi, Wireless Fidelity or WLAN) communication unit 222, and a wireless personal area network (WPAN) communication unit 223.

The wireless communication network 220, which is a configuration for transmitting/receiving data according to a wireless communication method, can transmit/receive data to/from the caching server 100 using one of the wireless network communication unit 221, the WLAN communication unit 222 and the WPAN communication unit 223 when the terminal 200 uses wireless communication.

The wireless network communication unit 221 transmits/receives data by being connected to the network 300 through a base station. Upon reception of data from the controller 270, the wireless network communication unit 221 can transmit the data to the caching server 100 or the web service server 400 by being connected to the network 300 through the base station. In addition, the wireless network communication unit 221 can receive data from the caching server 100 or the web service server 400 by being connected to the network 400 through the base station and provide the received data to the controller 270.

The WLAN communication unit 222 performs communication according to WLAN or WiFi scheme. Upon reception of data from the controller 270, the WLAN communication unit 222 can transmit the data to the caching server 100 or the web service server 400 by being connected to the network 300 through an access point (AP). Furthermore, the WLAN communication unit 222 can receive data from the caching server 100 or the web service server 400 by being connected to the network 300 through the access point and provide the received data to the controller 270.

The WPAN communication unit 223 transmits/receives data according to WPAN scheme and is used for short-distance wireless communication, as compared to the wireless network communication unit 221 and the WLAN communication unit 222. When the WPAN communication unit 223 can be connected to a gateway directly or through multi-hop, the WPAN communication unit 223 can transmit/receive data to/from the caching server 100 or the web service server 400 by being connected to the network 300 through the gateway. The WPAN communication unit 223 can exemplify communication according to Bluetooth, IrDA, ZigBee, etc.

The wired communication unit 230 transmits and receives data in a wired manner. The wired communication unit 230 can transmit/receive data to/from the caching server 100 or the web service server 400 by being connected to the network 300 by wire.

The input unit 240 receives one of a command, choice, data and information from a user and may include a plurality of input keys and function keys for receiving numeral or character information and setting various functions. The input unit 240 senses a key input of the user and transmits an input signal corresponding to the sensed key input to the controller 270. For example, the input unit 240 can use any input means that will be developed in the future in addition to conventional input devices such as a keyboard, a keypad, a mouse, and a joystick. According to an embodiment of the present invention, the user can input an answer through the input unit 240.

The display unit 250 outputs a result or information obtained from an operation of the terminal 200 such that the user can visually recognize the result or information. Particularly, the display unit 250 can display links to cached webpages according to an embodiment of the present invention on a screen.

Meantime, a web application has an address input window as an interface, by which links to webpages are input. When the user inputs a link to a specific webpage to the address input window through the input unit 240, the display unit 250 displays the link input to the address input window under the control of the controller 270. Here, the display unit 240 can complete the link according to an auto complete function and display the link if the user inputs part of the link. The auto-complete function completes a link that has been input by the user and displays the link when the user inputs part of the link.

The display unit 250 can simultaneously display the link input by the user and cached webpage(s). The display unit 250 may be a touchscreen. In this case, the display unit 250 can execute the whole or some of functions of the input unit 240.

The storage unit 260 stores data and includes a main storage unit and an auxiliary storage unit. The storage unit 260 can store operating systems, web applications, cached webpages, etc. Furthermore, the storage unit 260 can store the caching page list received from the caching server 100. Data stored in the storage unit 260 can be deleted, changed or added according to user operation.

The controller 270 receives the caching page list from the caching server 100 when connected to the network 300 through the communication unit 210. Then, the controller 270 refers to links to webpages, included in the caching page list, and performs caching that downloads the webpages corresponding to the links. It is preferable to perform caching when traffic of the communication unit 210 is less than a predetermined packet unit. The controller 270 stores the cached webpages in the storage unit 260. The caching page list includes links to webpages collected on the basis of a keyword registered in advance by the user of the terminal 200 and links to webpages visited by a user of another terminal 200, that is, a visit information collection object, through the terminal of the object.

The controller 270 can request the caching server 100 to provide the caching service according to user input before receiving the caching page list. Here, the controller 270 can transmit a keyword corresponding to webpage(s) to be cached and request registration of the keyword. In addition, the controller 270 can request a visit information collection object to be set.

When the user of the terminal 200 is selected as a visit information collection object of a user of another terminal, the controller 270 can extract links to webpages downloaded by the controller 270, that is, webpages visited by the user of the terminal 200, and store the extracted links in the storage unit 260. Then, the controller 270 can provide the links to the visited webpages to the caching server 100 through the communication unit 210. The caching server 100 can create a caching page list for the other user using the links to webpages, provided by the terminal 200.

Particularly, the controller 270 can activate or deactivate caching according to user input from the input unit 240 before receiving the caching page list. Upon activation of caching, the controller 270 can receive the caching page list and refer to links to webpages included in the received caching page list to cache the webpages corresponding to the links.

For automatic caching, the controller 270 can receive access authentication information (for example, user ID and password) of the caching server 100 from the user, store the access authentication information, request authentication to the authentication module 130 of the caching server 100 using the stored authentication information, and access the caching server 100. To perform automatic caching, the controller 270 can set information for downloading the caching page list from the caching server 10 in advance. For example, the controller 270 can set the IP and port of the caching server 100 as the information for downloading the caching page list. When a plurality of caching page lists and webpages to be cached are present, the controller 270 can set priority of the caching page lists and webpages to be cached according to user input for automatic caching.

According to a first embodiment of the present invention, when the user inputs a link for requesting a specific webpage, the controller 270 can simultaneously display the link input by the user and links to cached webpages. When the user selects a link to cached webpage(s) with reference to the displayed links to cached webpages, the controller 270 can display the cached webpage on the screen.

According to a second embodiment of the present invention, the controller 270 can display links to cached webpages. In this case, the controller 270 can discriminate the links to cached webpages from links to non-cached webpages. When the user selects a link to cached webpage(s) with reference to the links to cached webpages, the terminal 200 can display the cached webpage on the screen.

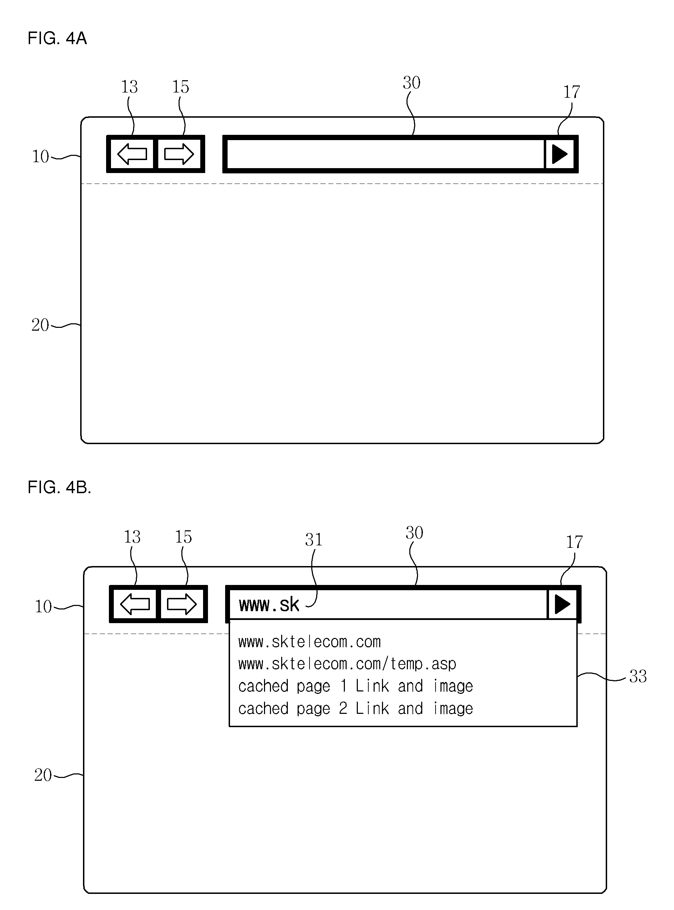

FIG. 4 illustrates a method for displaying cached webpages according to the first embodiment of the present invention.

FIG. 4 shows a screen on which a webpage is displayed according to execution of a web application in accordance with the first embodiment of the present invention. The web application has a webpage display function. For example, the web application can be a web browser.

Referring to FIG. 4A, the web application includes a control region 10 and a page display region 20. The control region 10 displays various interfaces 13, 15, 17 and 30 for controlling the web browser and the page display region 20 displays a webpage downloaded by the terminal 200.

The control region 10 has an address input window 30 as an interface. The address input window 30 is an interface for inputting a link of webpage(s). The user can input a link for calling a specific webpage to the address input window 30 after activating the address input window 30. A link is configured in the form of an address and may be a uniform resource identifier (URI). The URI includes a uniform resource locator (URL) and a uniform resource name (URN). When the user inputs a link and then inputs a command for calling a webpage corresponding to the link, the terminal 200 downloads the webpage corresponding to the link. The downloaded webpage is displayed in the page display region 20.

Reference numerals 13 and 15 respectively denote interfaces for calling a page prior to the current page and a page following the current page from among pages that have been visited by the user. Reference numeral 17 denotes an interface for calling a webpage corresponding to a link input to the address input window 30.

Referring to FIG. 4B, when the user inputs a link for calling a specific webpage, the terminal 200 can display the input link and links to cached webpages, simultaneously. For example, the address input window 30 as an interface can be implemented as a combo box. The combo box is an interface 33 that displays data items in the form of a drop & down list such that one of the displayed data items can be selected. When the interface is implemented as a combo box, the link input by the user can be displayed through the combo box and the links to cached webpages can be displayed in a drop & down list below the link input by the user.

The links to cached webpages can be displayed in the form of at least one of an address or an image. The address form means display of webpage links as a text and the image form means display of webpage links as an image. The address form can exemplify a URI and the image form can exemplify an icon. Only a predetermined number of cached webpages can be displayed. The cached webpages can be displayed in predetermined order.

The web application can provide the auto complete function that automatically completes a link to webpage(s), input by the user, and displays the link when the user inputs part of the link to the address input window 30. The auto complete function memorizes a link that has been input by the user, automatically completes the link and displays the link when the user inputs part of the link. In FIG. 4B, reference numeral 31 denotes part ("www.sk") that is being input by the user. The web application can automatically complete "www.sk" according to the auto complete function and display "www.sktelecom.com" and "www.sktelecom.com/temp/asp", as shown by reference numeral 33. In addition, the web application can display links to cached webpages according to the embodiments of the present invention below the link displayed according to the auto complete function.

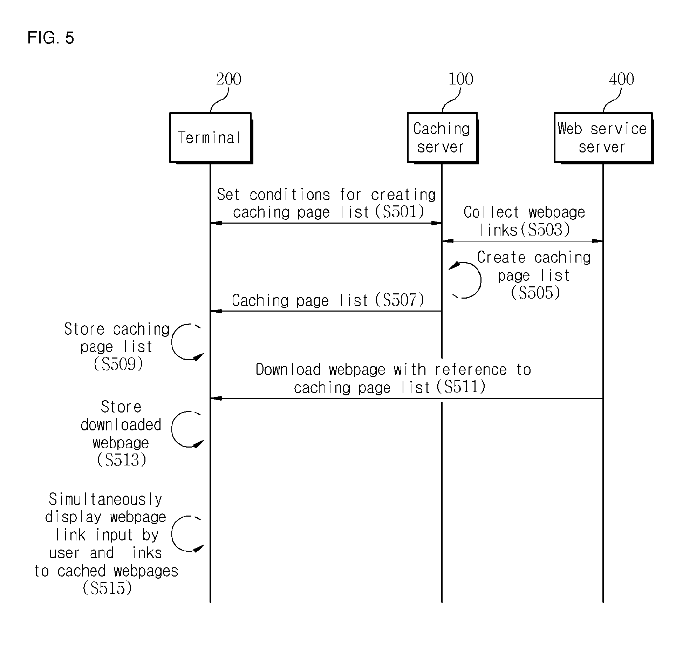

FIG. 5 illustrates a method for displaying cached webpages in a caching system according to the first embodiment of the present invention.

Referring to FIG. 5, the terminal 200 and the caching server 100 sets conditions for creating a caching page list in step S501. The conditions include a keyword and a visit information collection object, which are requested by the user of the terminal 200, as described above.

When the conditions are set, the caching server 100 collects links to webpages that match the conditions from the web service server 400 that stores webpages in step S503. The caching server 100 collects at least one link to webpage(s). The caching server 100 creates the caching page list including the collected links to webpages in step S505. Then, the caching server 100 transmits the caching page list to the terminal 200 in step S507.

Upon reception of the caching page list, the terminal 200 stores the received caching page list in step S509. The terminal 200 refers to the links to webpages, included in the caching page list, to download the webpages in step S511. When a plurality of links to webpages is included in the caching page list, the terminal 200 can download the webpages in a predetermined order. Then, the terminal 200 stores the downloaded webpages in step S513. As described above, the terminal 200 refers to the links to webpages, included in the caching page list, to perform caching that downloads the webpages and stores the downloaded webpages.

According to the embodiment of the present invention, the user can call a desired specific webpage. In this case, the terminal 200 displays a link to the specific webpage, input by the user, and the links to cached webpages together in step S515. This is shown in FIG. 4.

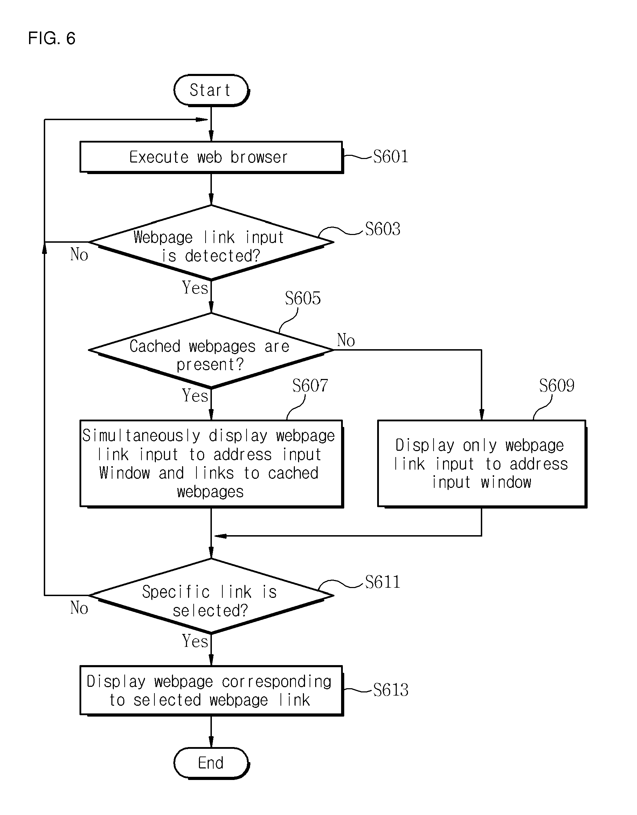

FIG. 6 illustrates a method for displaying cached webpages in a terminal according to the first embodiment of the present invention.

The caching server 100 can provide the caching service when the terminal 200 requests the caching service. A state that the caching server 100 provides the caching service at the request of the terminal 200 is referred to as a caching mode of the terminal 200. FIG. 6 assumes that the terminal 200 is in the caching mode. In this case, the terminal 200 receives a caching page list from the caching server 100, and then performs caching that receives webpages corresponding to links included in the caching page list with reference to the links included in the caching page list and stores the receive webpages.

Referring to FIG. 6, the controller 270 executes a web application in step S601. The web application can be a web browser that displays webpages. That is, the controller 270 displays the web application execution screen, as shown in FIG. 4A, through the display unit 250.

The user can activate the address input window 30 of the web browser through the input unit 240 and then input a link to a specific webpage to the address input window 30. Accordingly, the controller 270 can detect input of the link to the specific webpage by the user through the input unit 240 in step S603.

Upon detection of the link input, the controller 270 checks whether cached webpages are present in step S605. When the cached webpages are present, the controller 270 simultaneously displays the link to the specific webpage, input to the address input window 30 by the user, and links to the cached webpages in step S607. When it is checked that there is no cached webpage in step S605, the controller 270 displays only the link to the specific webpage, input to the address input window 30 by the user, in step S609.

When at least one of the links to webpages is displayed according to one of steps S607 and S609, the user can select one of the links to webpages. Particularly, when the link to the specific webpage, input by the user, and the links to cached webpages are simultaneously displayed in step S607, the user can select one of the links. Upon selection of a specific link by the user through the input unit 240, the controller 270 detects an input for selecting the specific link through the input unit 240 in step S611 and displays a webpage corresponding to the link selected by the user in step S613. When the user selects a link to cached webpage(s), the controller 270 can load the cached webpage(s) stored in the storage unit 260 and display the cached webpage(s) on the web application. If the user selects the link to the specific webpage, input by the user, the controller 270 can download the corresponding webpage through the communication unit 210 with reference to the webpage links and display the webpage on the web application.

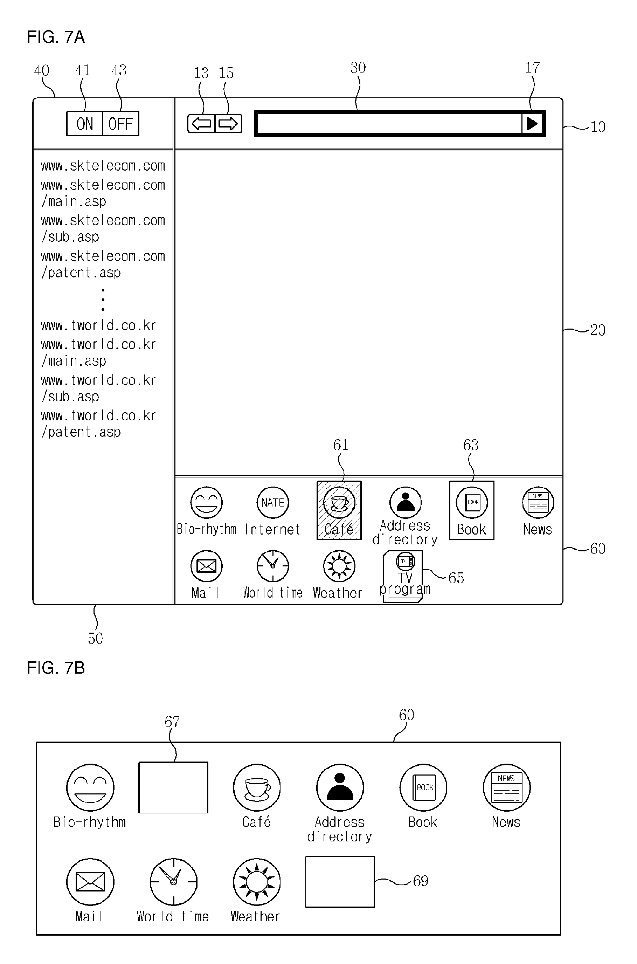

FIG. 7 illustrates a method for displaying cached webpages according to the second embodiment of the present invention.

FIG. 7 shows a screen on which a webpage is displayed according to execution of a web application in accordance with the embodiment of the present invention. The web application has a webpage display function. For example, the web application can be a web browser.

Referring to FIG. 7, the web application includes a control region 10, a page display region 20, a caching set region 40, a first link display region 50 and a second link display region 60.

Referring to FIG. 7A, the control region 10 displays various interfaces 13, 15, 17 and 30 for controlling the web application. The page display region 20 displays a webpage downloaded by the terminal 200. The control region 10 includes an address input window 30 as an interface. The address input window 30 is an interface for inputting a link of a webpage. The user can input a link for calling a specific webpage to the address input window 30 after activating the address input window 30. A link is configured in the form of an address and may be a uniform resource identifier (URI). The URI includes a uniform resource locator (URL) and a uniform resource name (URN). When the user inputs a link and then inputs a command for calling a webpage corresponding to the link, the terminal 200 can download the webpage corresponding to the link. The downloaded webpage is displayed in the page display region 20. The web application can provide the auto complete function that automatically completes a link to webpage(s), input by the user, and displays the link when the user inputs part of the link to the address input window 30. The auto complete function memorizes a link that has been input by the user, automatically completes the link and displays the link when the user inputs part of the link.

Reference numerals 13 and 15 respectively denote interfaces for calling a page prior to the current page and a page following the current page from among pages that have been visited by the user. Reference numeral 17 denotes an interface for calling a webpage corresponding to a link input to the address input window 30.

The caching set region 40 is used to activate or deactivate the caching function and includes an interface for setting activation of the caching function. The interface is preferably implemented as a button. Reference numeral 41 denotes a button for activating the caching function and reference numeral 43 denotes a button for deactivating the caching function.

The first and second link display regions 50 and 60 display links to cached webpages. While FIG. 7 shows the first and second link display regions 50 and 60 which are respectively located at the left and bottom of the page display region 20, the link display regions for displaying cached webpages can be arranged in other locations as necessary. Alternatively, only one of the first and second link display regions 50 and 60 can be used, or a new link display region can be generated and arranged in an area other than the first and second link display regions 50 and 60.

Links to cached webpages can be displayed in the form of at least one of an address or an image. The address form means display of webpage links as a text and the image form means display of webpage links as an image. The address form can exemplify a URI and the image form can exemplify an icon. Only a predetermined number of cached webpages can be displayed. The cached webpages can be displayed in a predetermined order.

The first link display region 50 displays links in the form of an address and the second link display region 60 displays links in the form of an image, for example.

According to the embodiment of the present invention, the terminal 200 can refer to links to webpages, included in a caching page list, to cache the webpages in a predetermined order. Accordingly, the terminal 200 displays all the links to webpages included in the caching page list in a predetermined region (50 or 60) of the web application, and then performs caching in a predetermined order. In this case, if cached webpages are present, the terminal 200 can display links to the cached webpages such that they are discriminated from links to non-cached webpages.

According to the present embodiment of the invention, when links to webpages are displayed in the address form, a link to cached webpage(s) can be displayed in a font, thickness and color different from those of a link to non-cached webpage(s) such that the links to cached webpage(s) is distinguished from the link to non-cached webpage(s). When links to webpages are displayed in the image form, a link to cached webpage(s) can be given an image effect and displayed such that the link to cached webpage(s) can be distinguished from a link to non-cached webpage(s). For example, the image effect can use a method 61 of expressing an image in a fluorescent color, a method 63 of drawing a border around an image, or a method 65 of displaying an image as if the image is protruded.

Referring to FIG. 7B, since images corresponding to cached webpages can be extracted, links to non-cached webpages are displayed as icons whereas links to the cached webpages are displayed as thumbnail images 67 and 69 so as to discriminate the links to non-cached webpages from the links to the cached webpages.

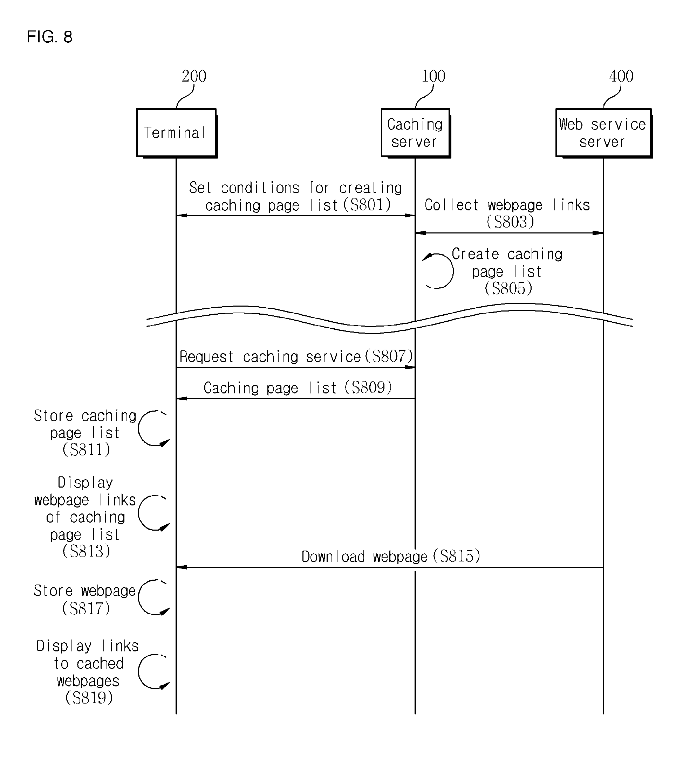

FIG. 8 illustrates a method for displaying cached webpages in a caching system according to the second embodiment of the present invention.

Referring to FIG. 8, the terminal 200 and the caching server 100 set conditions for creating a caching page list in step S801. The conditions include a keyword and a visit information collection object, which are requested by the user of the terminal 200, as described above.

When the conditions are set, the caching server 100 collects links to webpages that match the conditions from the web service server 400 that stores webpages in step S803. The caching server 100 collects at least one link to webpage(s). The caching server 100 creates the caching page list including the collected links to webpages in step S805.

The terminal 200 can request the caching service to the caching server 100 in step S807. Accordingly, the caching server 100 transmits the caching page list to the terminal 200 in step S809.

Upon reception of the caching page list, the terminal 200 stores the received caching page list in step S811 and displays the links to webpages included in the caching page list in step S813. Then, the terminal 200 refers to the links to webpages included in the caching page list and downloads the webpages corresponding to the links in step S815. When a plurality of links to webpages is included in the caching page list, the terminal 200 can download the webpages in a predetermined order. Subsequently, the terminal 200 stores the downloaded webpages in step S817. As described above, the terminal 200 refers to the links to webpages, included in the caching page list, to perform caching that downloads the webpages and stores the downloaded webpages. The terminal 200 displays links to cached webpages in step S819 in such a manner that the links to cached webpages are distinguished from links to non-cached webpages. This has been described with reference to FIG. 7.

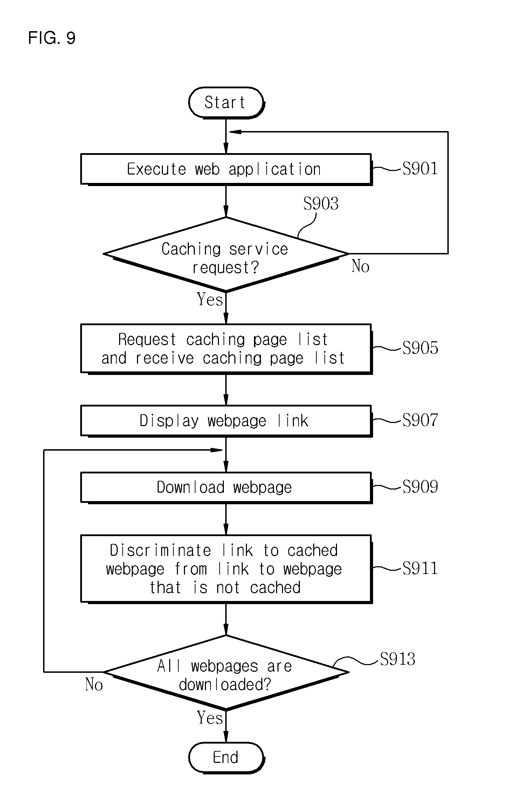

FIG. 9 illustrates a method for displaying cached webpages in a terminal according to the second embodiment of the present invention.

Referring to FIG. 9, the controller 270 executes a web application in step S901. Accordingly, the web application is displayed on the screen through the display unit 250. It is assumed that the web application is a web browser that displays webpages with reference to links to webpages.

Upon execution of the web application, the user can request the caching server 100 to provide the caching service through the input unit 240. The controller 270 can detect the user request for the caching service through the input unit 240 in step S903.

Upon detection of the request for the caching service, the controller 270 requests the caching server 100 to transmit a caching page list through the communication unit 210, receives the caching page list, and stores the received caching page list in step S905. The controller 270 displays links to webpages, included in the caching page list, in step S907.

Subsequently, the controller 270 performs caching that refers to the links to webpages included in the caching page list to download the webpages corresponding to the links and stores the downloaded webpages in step S909. Here, the webpages are downloaded in a predetermined order.

The controller 270 displays links to cached webpages from among the links to webpages, displayed in step S907, in such a manner that the links to cached webpages are distinguished from links to non-cached webpages in step S911.

The controller 270 checks whether all the webpages corresponding to the links included in the caching page list are downloaded in step S913. When all the webpages are not downloaded, the controller 270 repeats steps S909 to S913. When all the webpages are downloaded, the controller 270 finishes the process.

According to the second embodiment of the present invention as described above, when a caching page list including links to webpages collected according to preset conditions is created and caching is performed using the caching page list according to user intention, the probability that the user will use cached webpages increases, and thus caching efficiency is improved. Furthermore, links to cached webpages are displayed to inform the user of presence of the cached webpages so as to induce the user to use the cashed webpages. This increases the possibility that the user uses the cached webpages so as to improve caching efficiency. In addition, since links to cached webpages from among webpage links included in the caching page list are displayed to inform the user whether a specific webpage is cached, it is possible to improve web caching efficiency and promote use of the webpage caching function. Particularly, a web application can be stably executed through caching according to the embodiments of the present invention in an off-line area, an area having a high line cost, or an area having a poor network state.

A description will be made of a method for displaying cached webpages according to the first or second embodiment of the present invention.

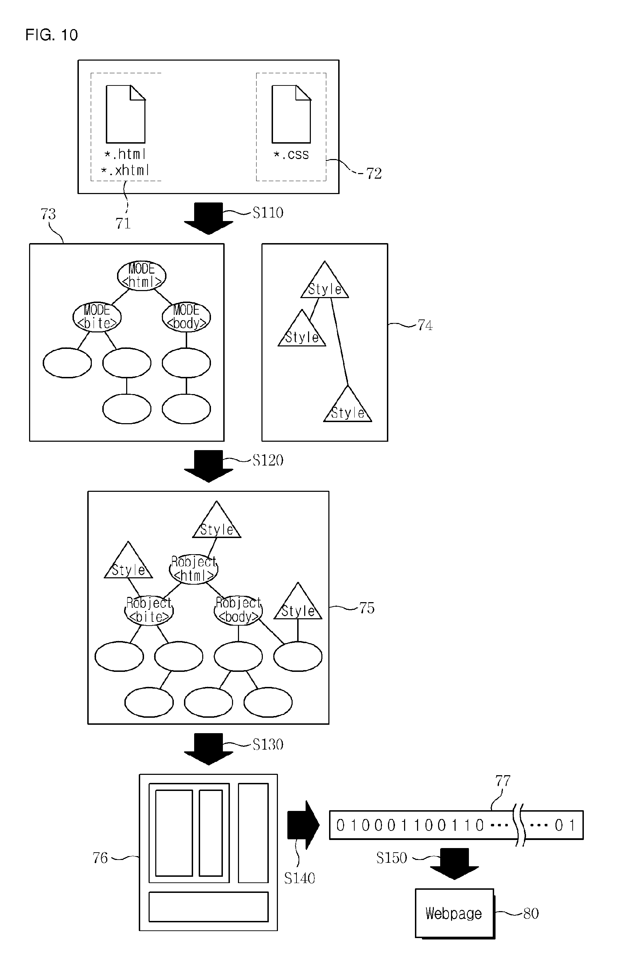

FIG. 10 illustrates a method for displaying webpages according to an embodiment of the present invention.

In general, programming languages can be classified into an imperative description language and a declarative description language. The imperative description language places emphasis on 'how' a value is found and specifies a to-be-executed algorithm not a target. Conventional Fortran, C, and Java correspond to the imperative description language. On the other hand, the declarative description language puts emphasis on what is 'value' and specifies a target not an algorithm. Webpages processed in the present invention are created using the declarative description language in general.

Referring to FIG. 10, webpage data includes a markup language 71 and a stylesheet 72. While the webpage data can additionally include a script language, description of part of processing the script language is omitted.

In step S110, components of the markup language 71 and the stylesheet 72 are decomposed into significant tokens according to a declarative description language interpretation method and rank relationship among the significant tokens is analyzed so as to create a parse tree in which a sentence structure has been determined. Here, the parse tree includes a document object model (DOM) tree 73 and a style tree 74. That is, the markup language 71 is composed of a tag, the attribute of the tag, and normal text. The markup language 71 is decomposed to create the DOM tree on the basis of rank relationship. The stylesheet 72 has styles that designate characters, blank and layout of a page 80 represented in the markup language 71. The stylesheet 72 is decomposed to form the style tree 74 in which a plurality of styles are arranged in a tree structure depending on rank relationship.

In step S120, the DOM tree 73 and the style tree 74 are combined to create a renderer tree 75. Subsequently, a layout adapted to a style is set through analysis of the renderer tree 75 and attribute values are arranged in the layout to generate page data 76 in step S130. This page data 76 is data prior to being rendered and displayed as the page 80 on the screen.

After the terminal 200 performs steps S110 to S130 on a cached webpage to generate the page data 76, the terminal 200 can serialize the structure of the page data 76 and store the page data in the form of binary data in step S140. The page data stored in the form of binary data is referred to as binary page data 77 hereinafter. In this state, when the user requests execution of the web page 80, the binary page data 77 can be directly rendered in step S150 to output the web page 80.

According to the aforementioned embodiment of the present invention, when a caching page list including links to webpages collected according to preset conditions is created and caching is performed using the caching page list according to user intention, the probability that the user will use cached webpages increases, and thus caching efficiency is improved. Furthermore, links to cached webpages are displayed to inform the user of presence of the cached webpages so as to induce the user to use the cashed webpages. This increases the possibility that the user uses the cached webpages so as to improve caching efficiency. In addition, when the user inputs the address of a webpage in order to call the webpage, addresses of cached webpages can be displayed to inform the user of the cached webpages such that the user calls the cached webpages. This improves webpage caching efficiency. Particularly, a web application can be stably executed through caching according to the embodiments of the present invention in an off-line area, an area having a high line cost, or an area having a poor network state.

The method for displaying cached webpages according to the present invention may be implemented as program commands that can be executed by various computer means and written to a computer-readable recording medium. The computer-readable recording medium may include a program command, a data file, a data structure, etc. alone or in combination. The program commands written to the medium are designed or configured especially for the present invention, or known to those skilled in computer software. Examples of the computer-readable recording medium include magnetic media such as a hard disk, a floppy disk, and a magnetic tape, optical media such as a CD-ROM and a DVD, magneto-optical media such as a floptical disk, and a hardware device configured especially to store and execute a program command, such as a ROM, a RAM, and a flash memory. Examples of a program command include a premium language code executable by a computer using an interpreter as well as a machine language code made by a compiler. The hardware device may be configured to operate as one or more software modules to implement the present invention or vice versa.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

### Industrial Applicability

The present invention relates to a system for displaying cached webpages, a server therefor, a terminal therefor, a method therefor, and a computer-readable recording medium on which the method is recorded. The present invention can induce a user to call a cached webpage by displaying links to cached webpages to inform the user that the webpages corresponding to the links have been cached when the user inputs a link to a webpage in order to call the webpage. Furthermore, the present invention can display links to cached webpages, included in a caching page list, in such a manner that the links to cached webpages are distinguished from links to non-cached webpages so as to inform the user that a webpage having a corresponding link has been cached such that the user calls the cached webpage. In addition, the present invention can cache webpages in which the user is interested according to preset conditions and inform the user of the cached webpages, and thus the probability that the user visits the webpages increases to thereby improve caching efficiency. Particularly, the possibility that the user visits cached webpages is high and caching efficiency is further improved in an off-line area, an area having high line cost or an area having a poor network state. Moreover, a web application can be stably executed by using the caching function. The present invention is industrially applicable since it has sufficient marketing and sales possibility.

## Claims

1. A system for displaying cached webpages, comprising:
a web service server configured to store one or more webpages;
a caching server configured to collect links to webpages that match preset conditions from among the webpages, and to create a caching page list including at least one of the collected links to webpages; and
a terminal configured to cache the webpages by referring to the links to webpages in the caching page list and, whenever receiving a user input of a link for calling up a specific webpage, to simultaneously display the input link and the link to the cached webpages.

2. A server for displaying cached webpages, comprising:
a communication module configured to transmit/receive data through a network;
a registration module configured to register at least one condition of a specific keyword for collecting links to webpages having contents related to the keyword and a visit information collection object having information for discriminating a specific user from other users to collect links to webpages visited by the specific user; and
a caching module configured to collect links to webpages that match the condition, to create a caching page list including at least one of the collected links to webpages, and to provide the created caching page list to a terminal through the communication module.

3. The server of claim 2, further comprising a registration module configured to register the condition.

4. The server of claim 2, further comprising a storage module configured to store the caching page list.

5. A terminal for displaying cached webpages, comprising:
an input unit configured to receive an input signal from a user;
a display unit configured to visually display data; and
a controller configured to execute a web application that displays webpages and, when detecting a user input of a link to a specific webpage through the input unit, to control the display unit to simultaneously display the input link and at least one of links to cached webpages.

6. The terminal of claim 5, wherein the web application has an address input window as an interface by which a link to webpages is input, and the input link and the cached webpages are displayed in the address input window.

7. The terminal of claim 5, further comprising a communication unit configured to transmit/receive data through a network,
wherein the controller receives a caching page list including at least one of links to webpages collected according to preset conditions through the communication unit and generates the cached webpages by downloading webpages through the collected links to webpages and storing the downloaded webpages.

8. The terminal of claim 7, wherein the communication unit comprises at least one of a wireless communication unit configured to transmit/receive data in a wireless manner, and a wired communication unit configured to transmit/receive data in a wired manner.

9. The terminal of claim 8, wherein the wireless communication unit comprises at least one of a wireless network communication unit configured to transmit/receive data by being connected to a network through a base station;
a wireless local area network (WLAN) communication unit configured to transmit/receive data by being connected to a network through an access point; and
a wireless personal area network (WPAN) communication unit configured to transmit/receive data by being connected to a network through a gateway according to a wireless PAN scheme.

10. The terminal of claim 5, further comprising a storage unit configured to store the caching page list and at least one of the cached webpages.

11. The terminal of claim 5, wherein, when the controller detects selection of one of the input link and the link to cached webpages by the user through the input unit, the controller displays a webpage corresponding to the selected link through the display unit.

12. The terminal of claim 11, wherein, when the selected link corresponds to one of the link to cached webpages, the controller loads the corresponding cached webpages from the storage unit and displays the cached webpages through the display unit.

13. The terminal of claim 5, wherein the link to cached webpages is displayed in at least one of an address form and an image form.

14. The terminal of claim 13, wherein the address form corresponds to a URI and the image form corresponds to an icon.

15. A method for displaying cached webpages in a terminal, comprising:
executing a web application that displays a webpage corresponding to an input link;
upon detection of input of a link to a specific webpage by a user, checking whether cached webpages are present; and
simultaneously displaying the input link and at least one of links to the cached webpages when the cached webpages are present.

16. The method of claim 15, further comprising, when the user selects one of the input link and the links to the cached webpages, displaying a webpage corresponding to the selected link after the displaying of the input link and at least one of links to the cached webpages.

17. The method of claim 16, wherein, when the link selected by the user corresponds to a link to cached webpages, the displaying of the webpage comprises loading and displaying the cached webpages stored in the terminal.

18. A computer-readable recoding medium on which the method according to one of claims 15 to 17 is recorded.

19. A system for displaying cached webpages, comprising:
a web service server configured to store one or more webpages;
a caching server configured to collect links to webpages that match preset conditions from among the webpages and to create a caching page list including at least one of the collected links to webpages; and
a terminal configured to receive the caching page list, to display the links to webpages, included in the received caching page list, to cache the webpages by referring to the displayed links to webpages, and to display links to the cached webpages such that the links to the cached webpages are discriminated from links to non-cached webpages.

20. A terminal for displaying cached webpages, comprising:
a communication unit configured to transmit/receive data through a network;
a display unit configured to visually display data; and
a controller configured to execute a web application that displays webpages, to display the web application through the display unit, to receive a caching page list including at least one of links to webpages, collected according to preset conditions, through the communication unit, and to display the links to webpages included in the caching page list,
wherein the controller caches the webpages by referring to the displayed links to webpages and displays links to the cached webpages such that the links to the cached webpages are discriminated from links to non-cached webpages.

21. The terminal of claim 20, wherein the links to the cached webpages are displayed in at least one of an address form in which a webpage link is displayed as a text and an image form in which a webpage link is displayed as an image.

22. The terminal of claim 21, wherein the address form corresponds to a URI and the image form corresponds to an icon.

23. The terminal of claim 21, wherein, when the links to the cached webpages are displayed in the address form, the controller displays the links to the cached webpages in such a manner that at least one of a font, thickness and color of the links to the cached webpages is different from that of the links to non-cached webpages so as to discriminate the links to the cached webpages from the links to webpages that are not cached.

24. The terminal of claim 21, wherein, when the links to cached webpages are displayed in the image form, the controller displays the links to the cached webpages such that the links to the cached webpages are subjected to an image effect to be distinguished from the links to non-cached webpages,
wherein the image effect uses at least one of a method of expressing an image in a fluorescent color, a method of drawing a border around an image, and a method of displaying an image as if the image is protruded.

25. The terminal of claim 20, wherein the controller displays the links to non-cached webpages as icons and displays the links to the cached webpages as thumbnail images such that the links to the cached webpages are discriminated from the links to non-cached webpages.

26. The terminal of claim 20, further comprising a storage unit configured to store at least one of the cached webpages and the caching page list.

27. The terminal of claim 26, wherein the controller loads the cached webpages from the storage unit and displays the cached webpages through the display unit upon detection of input for selecting the links to the cached webpages.

28. The terminal of claim 20, wherein the communication unit comprises at least one of a wireless communication unit configured to transmit/receive data in a wireless manner, and a wired communication unit configured to transmit/receive data in a wired manner.

29. The terminal of claim 28, wherein the wireless communication unit comprises at least one of a wireless network communication unit configured to transmit/receive data by being connected to a network through a base station, a WLAN communication unit configured to transmit/receive data by being connected to a network through an access point, and a WPAN communication unit configured to transmit/receive data by being connected to a network through a gateway according to a WPAN scheme.

30. A method for displaying cached webpages in a terminal, comprising:
executing a web application that displays webpages;
receiving a caching page list including at least one of links to webpages collected according to preset conditions;
displaying the links to webpages included in the received caching page list; and
caching webpages by referring to the displayed links to webpages and displaying links to the cached webpages from among the displayed links to webpages such that the links to the cached webpages are discriminated from links to non-cached webpages.

31. The method of claim 30, wherein the links to the cached webpages are displayed in at least one of an address form in which a webpage link is displayed as a text and an image form in which a webpage link is displayed as an image.

32. The method of claim 31, wherein the address form corresponds to a URI and the image form corresponds to an icon.

33. The method of claim 30, wherein the displaying of the web application comprises displaying the links to non-cached webpages as icons and displaying the links to the cached webpages as thumbnail images such that the links to the cached webpages are discriminated from the links to non-cached webpages.

34. A computer-readable recording medium on which the method of one of claims 30 to 34 is recorded.
